# EUROPÄISCHE PATENTSCHRIFT

(11) **EP 3 981 598 B1**
(45) Veröffentlichungstag und Bekanntmachung des Hinweises auf die Patenterteilung: **13.12.2023**
(21) Anmeldenummer: 20200945.2
(22) Anmeldetag: 09.10.2020
(51) Int. Cl.: B32B 38/18, B32B 37/08, B32B 37/06, B32B 41/00

(54) **VORRICHTUNG UND VERFAHREN ZUM KASCHIEREN EINES SUBSTRATS MIT EINER THERMOPLASTISCHEN FOLIE**
DEVICE AND METHOD FOR LAMINATING A SUBSTRATE WITH A THERMOPLASTIC FILM
DISPOSITIF ET PROCÉDÉ DE CONTRECOLLAGE D'UN SUBSTRAT À L'AIDE D'UNE FEUILLE THERMOPLASTIQUE

(43) Veröffentlichungstag der Anmeldung: 13.04.2022
(73) Patentinhaber: Henkel AG & Co. KGaA, 40589 Düsseldorf (DE)
(72) Erfinder: ETHNER, Kai, 40764 Langenfeld (DE); KINZELMANN, Georg, 50259 Pulheim (DE)
(74) Vertreter: Wagner Albiger & Partner Patentanwälte mbB

(56) Entgegenhaltungen:
- EP-B1- 3 183 117
- DE-U1-202017 006 956
- DE-U1-202020 102 523
- Unknown: "Tension Control Complete Guide TENSION CONTROLLER ELECTROMAGNETIC CLUTCHES AND BRAKES", , 31. Dezember 2019 (2019-12-31), XP055784228, Gefunden im Internet: URL:https://dl.mitsubishielectric.co.jp/dl /fa/document/catalog/clutch/sh-170011eng/s h170011-c.pdf [gefunden am 2021-03-10]

## Beschreibung

Die vorliegende Erfindung betrifft ein Verfahren sowie eine Vorrichtung zum kontinuierlichen Kaschieren eines Substrats mit einem thermoplastischen Beschichtungsmaterial, insbesondere einer Folie. Bei dem Substrat kann es sich dabei ebenfalls um eine Folie handeln. Es kann sich jedoch auch um einen festen Körper aus Kunststoff, Metall oder einem anderen Material handeln.

Es sind verschiedene Verfahren zum Kaschieren von Substraten mit einer thermoplastischen Folie bekannt. Die EP 3 183 117 B1 beschreibt ein Verfahren sowie eine Vorrichtung zum Verkleben von zwei folienförmigen Substraten, wobei zumindest die eine Folie auf einem Förderband derart an einer Kühl- und Heizeinrichtung vorbeigeführt wird, dass die eine Seite der Folie gekühlt, die andere jedoch geheizt wird.

Die EP 3 526 042 B1 offenbart ein ähnliches Verfahren, bei dem jedoch die eine Folie auf einer gekühlten Walze geführt und anschließend auch auf dieser Walze mit der zweiten Folie verbunden wird. Die Führung einer einseitig beheizten Folie auf einer gekühlten Walze ist zudem aus der DE 20 2017 006 956 U1 und aus der DE 20 2020 102 523 U1 bekannt.

Wie sich jedoch herausgestellt hat, kann es aufgrund von schwerkraftbedingten oder thermisch bedingten Längenänderungen der thermoplastischen Folie zu Schwierigkeiten beim Zuführen der thermoplastischen Folie und beim anschließenden Kaschieren kommen, insbesondere zu einer Faltenbildung oder einem Reißen der Folie.

Es ist daher eine Aufgabe der vorliegenden Erfindung, eine Vorrichtung und ein Verfahren zum Kaschieren eines Substrats mit einer thermoplastischen Folie anzugeben, die die genannten Nachteile nicht aufweisen.

Diese Aufgabe wird gelöst mit dem Gegenstand der unabhängigen Patentansprüche. Vorteilhafte Ausgestaltungen und Weiterentwicklungen sind Gegenstand der Unteransprüche.

Gemäß einem Aspekt der Erfindung wird eine Vorrichtung zum Kaschieren eines Substrats mit einer thermoplastischen Folie angegeben, wobei die Vorrichtung ein Kaschierwerk zum Kaschieren des Substrats mit der thermoplastischen Folie aufweist sowie eine Zuführeinrichtung für die thermoplastische Folie zum Kaschierwerk. Die Zuführeinrichtung für die thermoplastische Folie weist Einrichtungen zum Heizen einer ersten Seite der Folie und Einrichtungen zum Kühlen einer zweiten Seite der Folie auf sowie eine Anzahl steuerbar angetriebener Walzen, über die die Folie an den Einrichtungen zum Heizen und den Einrichtungen zum Kühlen vorbei geführt ist, wobei eine Spannung der Folie über die Geschwindigkeit der angetriebenen Walzen regelbar ist.

Unter einem Kaschierwerk wird hier und im Folgenden eine Vorrichtung verstanden, die das Beschichten, insbesondere durch Zuhilfenahme von Druck, des Substrats mit der thermoplastischen Folie durchführt. Typischerweise sind hierfür Walzen vorgesehen, durch die die beiden Folien geführt sind, falls das Substrat als Folie ausgebildet ist. Falls das Substrat nicht als Folie ausgebildet ist, umfasst das Kaschierwerk häufig ebenfalls zumindest eine Walze, mittels der die thermoplastische Folie auf das Substrat gebracht wird.

Die Vorrichtung weist den Vorteil auf, dass sie eine praktisch berührungslose Führung der thermoplastischen Folie mittels der steuerbar angetriebenen Walzen ermöglicht. Die Folie liegt demnach in der Zuführeinrichtung zumindest streckenweise nicht flächig auf einem Förderband oder einer Walze mit großem Durchmesser oder einer anderen Oberfläche auf, sondern wird lediglich von den steuerbar angetriebenen Walzen punktuell unterstützt und gefördert und gegebenenfalls umgelenkt und ansonsten berührungslos geführt. Da die Drehgeschwindigkeit der angetriebenen Walzen steuerbar, insbesondere sogar regelbar ist, können Spannungen innerhalb der Folie durch den Aufbau von Geschwindigkeitsdifferenzen zwischen einzelnen Walzen ausgeglichen werden. Verliert beispielsweise die geführte Folie an Spannung, so kann eine Geschwindigkeitsdifferenz zwischen zwei Walzen derart eingestellt werden, dass die Folie wieder gespannt wird. Dies ist insbesondere vorteilhaft, da die Erwärmung der thermoplastischen Folie sowohl eine Ausdehnung als auch eine Aufweichung der Folie bewirkt.

Die Vorrichtung zum Kaschieren des Substrats mit einer thermoplastischen Folie kann darüber hinaus auch eine Zuführeinrichtung für das Substrat aufweisen, deren Ausgestaltung von der Art des Substrats abhängt. Als Einrichtungen zum Heizen der Folie können insbesondere Infrarotstrahler vorgesehen sein, jedoch auch andere Wärmequellen wie beispielsweise Laser. Zum Kühlen können beispielsweise gekühlte Bleche vorgesehen sein.

Gemäß einer Ausführungsform sind angetriebene Walzen in Bewegungsrichtung der Folie zumindest vor und hinter den Einrichtungen zum Kühlen und Heizen angeordnet. Diese Ausführungsform hat den Vorteil, dass Längenänderungen der thermoplastischen Folie, die durch das Aufheizen bzw. Kühlen der Folie verursacht wurden, über eine Geschwindigkeitsregelung der Walzen ausgeglichen werden können.

Die thermoplastische Folie ist insbesondere beabstandet zu den Einrichtungen zum Heizen geführt. Somit kommt die thermoplastische Folie nicht in Kontakt mit Elementen der Einrichtungen zum Heizen.

Die Einrichtungen zum Kühlen können zumindest eine gekühlte Walze umfassen, über die die Folie geführt ist. Bei dieser Ausführungsform kann insbesondere vor der gekühlten Walze eine regelbar angetriebene Walze vorgesehen sein, mittels derer über die Differenzgeschwindigkeit zur gekühlten Walze eine Spannung der Folie gesteuert bzw. geregelt werden kann.

Alternativ kann die thermoplastische Folie beabstandet zu den Einrichtungen zum Kühlen geführt sein. Im letzteren Fall sind die Einrichtungen zum Kühlen entlang der zwischen den Walzen gespannten Folienbahn in der Zuführeinrichtung angeordnet, jedoch nicht auf derselben Seite der Folie wie die Einrichtungen zum Heizen, sondern auf der gegenüberliegenden Seite.

Gemäß einer Ausführungsform sind zwischen den Einrichtungen zum Heizen und der thermoplastischen Folie Gitter zum Schutz der Einrichtungen zum Heizen vor einem Kontakt mit der Folie angeordnet. Derartige Gitter haben den Vorteil, dass sie einen Kontakt zwischen der thermoplastischen Folie und den Einrichtungen zum Heizen verhindern. Als zusätzliche Sicherung kann die Zuführeinrichtung zumindest eine Einrichtung zur Erzeugung eines Luftstroms zwischen der thermoplastischen Folie und den Einrichtungen zum Heizen aufweisen.

Die Einrichtung zur Erzeugung eines Luftstroms kann als Gebläse, Druckluftquelle oder auch als Unterdruckquelle ausgebildet sein. Sie hat den Vorteil, dass bei zu geringer Bahnspannung der Folie oder im Falle eines Bahnrisses ein Ankleben der Folie am Gitter bzw. an der Heizvorrichtung vermieden wird. Dazu kann es vorgesehen sein, dass die Einrichtung zur Erzeugung eines Luftstroms bei Verlust der Bahnspannung automatisch und/oder manuell eingeschaltet wird. Dabei kann sie beispielsweise Kaltluft zwischen die Einrichtung zum Heizen und die Folie bzw. das Gitter einblasen. Ist ein Gitter vorgesehen, so entweicht die Luft durch das Gitter und bläst die Folie von den Einrichtungen zum Heizen weg.

Für die Anordnung der angetriebenen Walzen und gegebenenfalls weiterer Walzen oder Umlenkrollen der Zuführeinrichtung gibt es verschiedene Möglichkeiten. Beispielsweise kann die thermoplastische Folie in der Zuführeinrichtung zumindest abschnittsweise senkrecht nach oben und/oder nach unten geführt sein. Sie kann jedoch auch zumindest abschnittsweise schräg nach oben und/oder nach unten geführt sein. Zudem kann die thermoplastische Folie zumindest abschnittsweise auf einem Kreisbogen geführt sein. Welche Anordnung gewählt wird, kann unter anderem von dem vorhandenen Platz und anderen praktischen Überlegungen abhängen.

Gemäß einer Ausführungsform weist die Zuführeinrichtung einen alternativen Zuführweg für die Folie auf, der keine Einrichtungen zum Heizen und keine Einrichtungen zu Kühlen umfasst. Auf diesem alternativen Zuführweg wird die Folie dem Kaschierwerk somit zugeführt, ohne dass sie geheizt wird. Der alternative Zuführweg kann beispielsweise verwendet werden, wenn keine thermoplastische Folie zum Kaschieren verwendet wird, sondern ein anderes Material, bzw. wenn die Verbindung zwischen der Folie und dem Substrat auf eine andere Weise, beispielsweise mittels eines separat aufgetragenen Klebstoffs, erfolgt. Insbesondere, wenn auf einer Anlage verschiedene Verfahren gleichzeitig oder abwechselnd zum Einsatz kommen sollen, ist das Vorhandensein des alternativen Zuführwegs von Vorteil.

Gemäß einer Ausführungsform weist die Vorrichtung eine Einrichtung zum Auffangen von an den Einrichtungen zum Kühlen entstehenden Kondensat auf. Diese Einrichtung kann beispielsweise als Wanne ausgebildet sein und so platziert werden, dass sie von den Einrichtungen zum Kühlen aufgrund der feuchten Raumluft entstehendes und abtropfendes Kondensat auffängt. Wie sich nämlich herausgestellt hat, können sich an den Einrichtungen zum Kühlen im Betrieb erhebliche Mengen an Kondensat bilden, die nicht unkontrolliert in die Anlage gelangen sollten, weil sie unter anderem die Oberflächen der thermoplastischen Folie beschädigen können.

Gemäß einem weiteren Aspekt der Erfindung wird ein Verfahren zum Kaschieren eines Substrats mit einer thermoplastischen Folie angegeben, wobei das Verfahren das Zuführen der Folie zu einem Kaschierwerk umfasst, wobei das Zuführen mittels einer Anzahl steuerbar angetriebener Walzen erfolgt, über die die Folie geführt wird, wobei die Folie während des Zuführens auf einer ersten Seite beheizt und auf einer zweiten Seite gekühlt wird, wobei während des Zuführens eine Spannung der Folie über die Geschwindigkeit der angetriebenen Walzen gesteuert und insbesondere auch geregelt wird.

Insbesondere kann eine abschnittsweise Regelung der Geschwindigkeit in der Zuführeinrichtung vorgesehen sein, die durch eine individuelle Regelbarkeit der angetriebenen Walzen ermöglicht wird. Wenn die Walzen unabhängig voneinander in ihrer Geschwindigkeit regelbar sind, ist es möglich, zwischen aufeinanderfolgenden Walzen Differenzgeschwindigkeiten einzustellen, über die eine Spannung in der Folie auf- oder abgebaut werden kann.

Bei dem Verfahren wird die Folie zumindest streckenweise berührungslos geführ und nur punktuell durch die regelbar angetriebenen oder einfache Walzen unterstützt. Dies hat auch den Vorteil, dass geringere Reibungskräfte an der Folie auftreten als bei einer Führung auf einem Förderband oder über eine Walze.

Dem Kaschierwerk wird ferner das Substrat zugeführt, das in Form einer Folie oder in anderer Form vorliegen kann.

Gemäß einer Ausführungsform wird die Folie durch einen in einen Zwischenraum zwischen der Folie und den Einrichtungen zum Heizen eingeblasenen Luftstrom auf Abstand von den Einrichtungen zum Heizen gehalten. Dazu kann insbesondere vorgesehen sein, dass in den Zwischenraum eingeblasene Luft durch Öffnungen in einem Gitter austritt und die Folie von den Einrichtungen zum Heizen weg bläst.

Gemäß einer Ausführungsform ist es vorgesehen, ein sich an den Einrichtungen zum Kühlen bildendes Kondensat aufzufangen und gegebenenfalls abzuführen.

Ausführungsformen der Erfindung werden im Folgenden anhand von schematischen Figuren näher erläutert.
- Figur 1: zeigt schematisch eine Vorrichtung zum Kaschieren eines Substrats mit einer thermoplastischen Folie gemäß einer ersten Ausführungsform der Erfindung;
- Figur 2: zeigt schematisch eine Vorrichtung zum Kaschieren eines Substrats mit einer thermoplastischen Folie gemäß einer zweiten Ausführungsform der Erfindung;
- Figur 3: zeigt schematisch eine Vorrichtung zum Kaschieren eines Substrats mit einer thermoplastischen Folie gemäß einer dritten Ausführungsform der Erfindung und
- Figur 4: zeigt schematisch eine Vorrichtung zum Kaschieren eines Substrats mit einer thermoplastischen Folie gemäß einer vierten Ausführungsform der Erfindung.

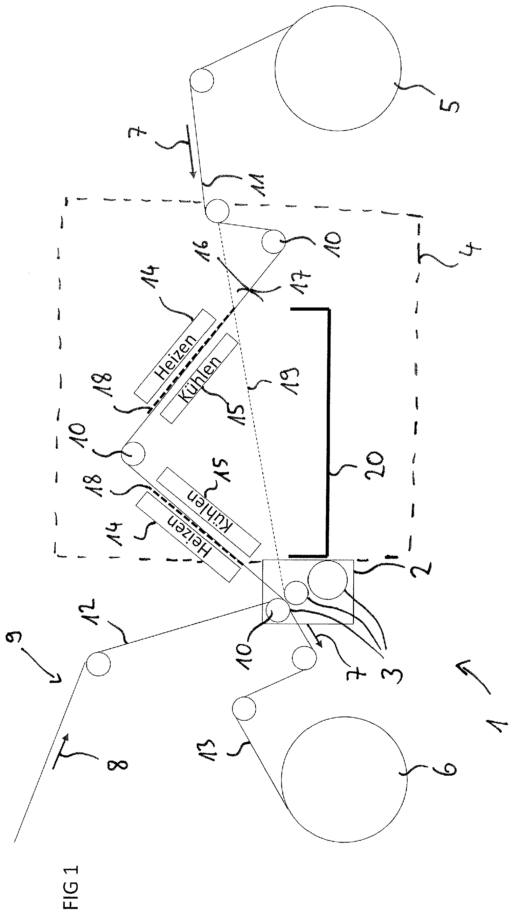

Figur 1 zeigt eine Vorrichtung 1 zum Kaschieren eines Substrats mit einer thermoplastischen Folie. In der Figur 1 ist die thermoplastische Folie mit dem Bezugszeichen 11 bezeichnet, das Substrat mit dem Bezugszeichen 12 und das bereits kaschierte Substrat mit dem Bezugszeichen 13.

Die Vorrichtung 1 umfasst ein Kaschierwerk 2, das insbesondere eine Anzahl von Walzen 3 zum Andrücken der Folie 11 an das Substrat 12 aufweist. Ferner umfasst die Vorrichtung 1 eine Zuführeinrichtung 4 für die thermoplastische Folie 11 zu dem Kaschierwerk 2. Die Folie 11 wird dabei von einem Abroller 5 abgerollt und mittels der Zuführeinrichtung 4 zu dem Kaschierwerk 2 transportiert, wonach das beschichtete Substrat 13 durch den Aufroller 6 aufgerollt wird.

Die Zuführeinrichtung 4 weist eine Anzahl regelbar angetriebener Walzen 10 auf. In der gezeigten Ausführungsform sind drei angetriebene Walzen 10 dargestellt. Diese Darstellung ist jedoch nur beispielhaft und es können auch mehr oder weniger angetriebene Walzen vorgesehen sein.

Die Zuführeinrichtung 4 umfasst weitere Walzen oder Rollen, die zur Führung und Umlenkung der Folie 11 dienen und lediglich beispielhaft gezeigt und nicht näher bezeichnet sind. Die thermoplastische Folie 11 wird mittels der angetriebenen Walzen 10 in Richtung des Pfeils 7 zu dem Kaschierwerk 2 transportiert. Das Substrat 12 wird in der gezeigten Ausführungsform ebenfalls mittels einer geeigneten Zuführeinrichtung 9 entlang des Pfeils 8 zu dem Kaschierwerk 2 transportiert. Nach dem Kaschieren wird das kaschierte Substrat 13 entlang des Pfeils 7 zu dem Aufroller 6 transportiert.

Die Folie 11 wird größtenteils berührungslos geführt. Lediglich im Bereich der Walzen 10 wird die Folie 11 punktuell geführt bzw. unterstützt. Zwischen den Walzen 10 ist die Folie 11 nicht unterstützt. Sie weist somit eine Spannung auf, die insbesondere durch die auf sie wirkende Schwerkraft und durch die Drehgeschwindigkeiten der Walzen 10 bedingt ist.

Entlang ihres Weges durch die Zuführeinrichtung 4 wird die thermoplastische Folie 11 zwischen den Walzen 10 an Einrichtungen 14 zum Heizen einer ersten Seite 16 der Folie 11 und Einrichtungen 15 zum Kühlen einer zweiten Seite 17 der Folie 11 vorbeigeführt. Auch die Einrichtungen 14 zum Heizen und die Einrichtungen 15 zum Kühlen sind hier lediglich beispielhaft dargestellt. Die Anzahl und Anordnung der Einrichtungen 14 zum Heizen und der Einrichtungen 15 zum Kühlen können variieren.

Das Beheizen der ersten Seite 16 bewirkt ein Erweichen bis teilweises Aufschmelzen der thermoplastischen Folie 11 an ihrer ersten Seite 16, sodass sich diese in dem Kaschierwerk 2 mit dem Substrat verbinden kann. Die Kühlung der zweiten Seite 17 dient dazu, die Folie 11 nicht vollständig aufschmilzen zu lassen und eine gewisse Stabilität zu erhalten, die für den Transportprozess zum Kaschierwerk 2 erforderlich ist.

Die Folie 11 wird von den Einrichtungen 14 zum Heizen und den Einrichtungen 15 zu Kühlen beanstandet geführt. Zwischen den Einrichtungen zum Heizen 14 und der Folie 11 sind Gitter 18 angeordnet, die ein Anhaften der Folie 11 an den Einrichtungen 14 zum Heizen verhindern sollen.

Die Zuführeinrichtung 4 weist einen alternativen Zuführweg für eine Folie zu dem Kaschierwerk 2 auf, der in Figur 1 durch eine gestrichelte Linie 19 angedeutet ist und der nicht an den Einrichtungen 14 zum Heizen und 15 zum Kühlen vorbeigeführt wird. Der alternative Weg kann für eine Folie genutzt werden, die nicht aus einem thermoplastischen Material besteht oder aus anderen Gründen nicht geheizt bzw. gekühlt werden soll.

Die Vorrichtung 1 umfasst ferner eine Wanne 20 zum Auffangen von Kondensat, das sich aufgrund der feuchten Raumluft an den Einrichtungen 15 zum Kühlen bildet. Die Wanne 20 ist unterhalb der Einrichtungen 15 zum Kühlen angeordnet, sodass Kondensat der Schwerkraft folgend von den Einrichtungen 15 zum Kühlen abfließt und in die Wanne 20 tropft. Auf diesem Weg passiert das Kondensat keine weiteren Elemente der Zuführeinrichtung 4, insbesondere nicht die Einrichtungen 14 zum Heizen, die durch das Kondensat beschädigt werden könnten. Die Wanne 20 ist somit derart platziert, dass sich an den Einrichtungen 15 bildendes Kondensat unmittelbar in die Wanne 20 tropfen kann. Durch die Abführung des Kondensats wird erreicht, dass kein Kondensat mit der Folie 11 in Berührung kommt, was Qualitätseinbußen der Oberfläche zur Folge haben könnte.

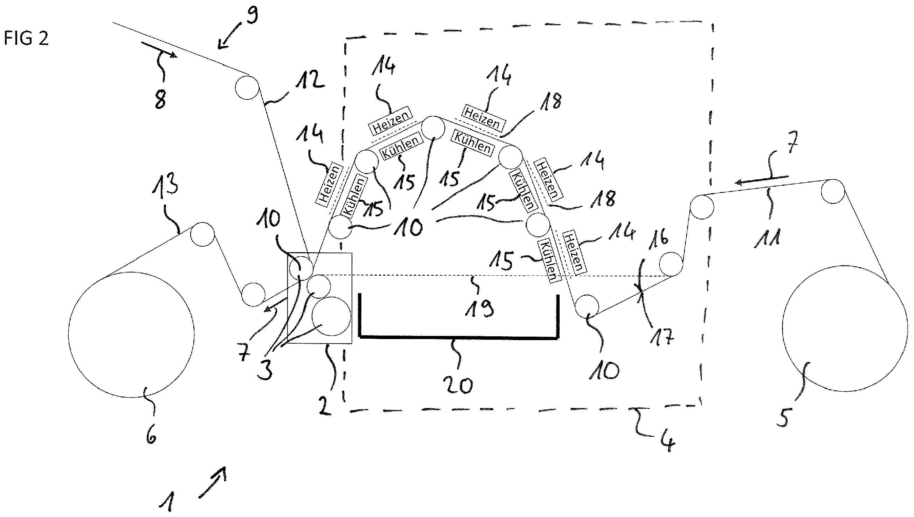

Figur 2 zeigt eine zweite Ausführungsform einer Vorrichtung 1 zum Kaschieren eines Substrats mit einer thermoplastischen Folie. Diese Vorrichtung 1 unterscheidet sich von der in Figur 1 gezeigten Ausführungsform dadurch, dass mehrere angetriebene Walzen 10 vorgesehen sind, die die Folie 11 auf einer Halbkreisbahn führen.

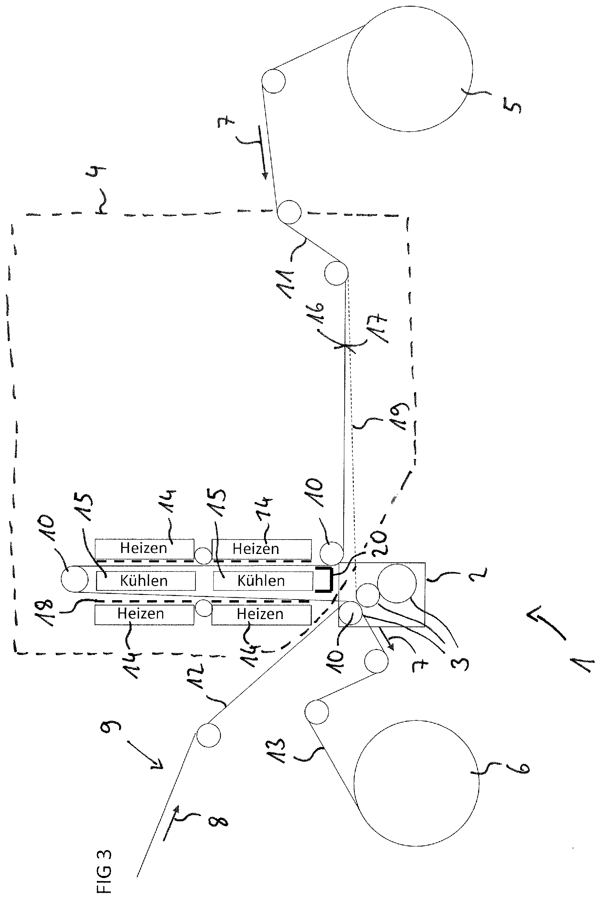

Figur 3 zeigt eine dritte Ausführungsform der Vorrichtung 1 zum Kaschieren eines Substrats mit einer thermoplastischen Folie 11. Diese Ausführungsform unterscheidet sich von den vorher gezeigten dadurch, dass mehrere angetriebene Walzen 10 übereinander angeordnet sind, sodass die Folie 11 abschnittsweise vertikal geführt ist. In der gezeigten Ausführungsform sind auch jeweils zwei Einrichtungen 14 zum Heizen und zwei Einrichtungen zum Kühlen 15 übereinander angeordnet.

Diese Anordnung ist besonders platzsparend und auch auf kleinem Bauraum zu verwirklichen. Die Einrichtungen 15 zum Kühlen sind in diese Ausführungsform übereinander angeordnet, jedoch nicht oberhalb von Einrichtungen 14 zum Heizen, damit kein Kondensat auf die Einrichtungen 14 zum Heizen tropfen kann. Unmittelbar unterhalb der unteren Einrichtung 15 zum Kühlen ist wiederum eine Wanne 20 zum Auffangen von Kondensat vorgesehen.

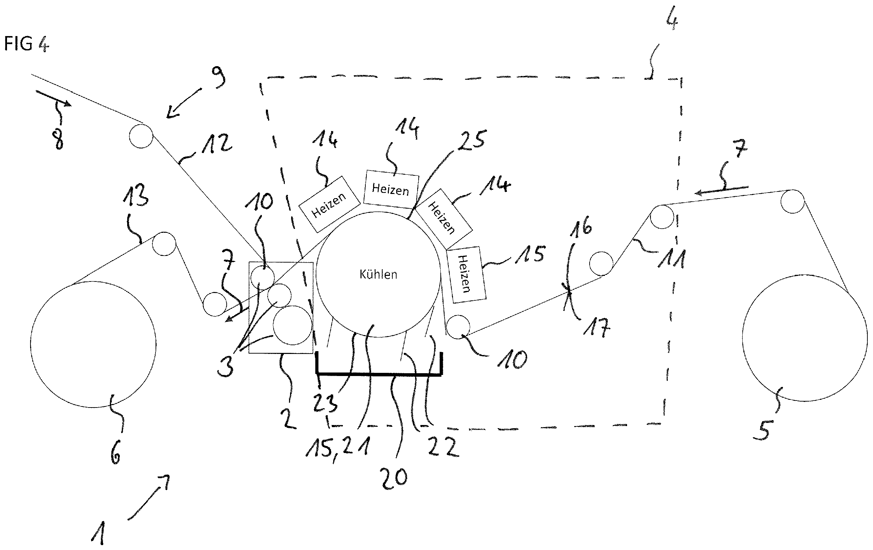

Figur 4 zeigt eine vierte Ausführungsform der Vorrichtung 1 zum Kaschieren eines Substrats 12 mit einer thermoplastischen Folie 11. Diese Ausführungsform unterscheidet sich von den vorher gezeigten dadurch, dass die Folie 11 in der Zuführeinrichtung 4 streckenweise nicht berührungslos geführt ist, sondern mittels einer gekühlten Walze 21. Die Folie 11 liegt somit mit ihrer zweiten Seite 17 stellenweise auf der Oberfläche der gekühlten Walze 21 auf. Die gekühlte Walze 21 kann ebenfalls in ihrer Geschwindigkeit regelbar angetrieben sein.

Auf dem Streckenabschnitt zwischen ersten angetriebenen Walze 10 und der gekühlten Walze 21 ist die Folie jedoch berührungslos geführt. Die Walze 10 hat die Aufgabe, aufgrund der Heizung in der Folie 11 entstehende Spannungen auszugleichen.

Bei dieser Ausführungsform sind Abstreifer 22 vorgesehen, die an der gekühlten Walze 21 entstehendes Kondensat von der Walze 21 abstreifen und in die Wanne 20 tropfen lassen. Dabei sind die Abstreifer 22 im Bereich einer Unterseite 23 der Walze 21 angeordnet, während die Folie 11 auf der Oberseite 24 der Walze 21 geführt ist. Auf diese Weise wird vermieden, dass die Folie 11 mit Kondensat auf der Oberfläche der Walze 21 in Berührung kommt, was Qualitätseinbußen der Folienoberfläche bewirken könnte.

### Bezugszeichenliste

- 1: Vorrichtung
- 2: Kaschierwerk
- 3: Walze
- 4: Zuführeinrichtung
- 5: Abroller
- 6: Aufroller
- 7: Pfeil
- 8: Pfeil
- 9: Zuführeinrichtung
- 10: Walze
- 11: Folie
- 12: Substrat
- 13: kaschiertes Substrat
- 14: Einrichtung zum Heizen
- 15: Einrichtung zum Kühlen
- 16: erste Seite
- 17: zweite Seite
- 18: Gitter
- 19: gestrichelte Linie
- 20: Wanne
- 21: Walze
- 22: Abstreifer
- 23: Unterseite
- 24: Oberseite

## Patentansprüche

1. Vorrichtung (1) zum Kaschieren eines Substrats (12) mit einer thermoplastischen Folie (11), wobei die Vorrichtung (1) folgendes aufweist:
- ein Kaschierwerk (2) zum Kaschieren des Substrats (12) mit der thermoplastischen Folie (11),
- eine Zuführeinrichtung (4) für die thermoplastische Folie (11) zum Kaschierwerk (2),
wobei die Zuführeinrichtung (4) für die thermoplastische Folie (11) Einrichtungen (14) zum Heizen einer ersten Seite (16) der Folie (11) und Einrichtungen (15) zum Kühlen einer zweiten Seite (17) der Folie (11) aufweist sowie eine Anzahl steuerbar angetriebener Walzen (10), über die die Folie (11) an den Einrichtungen (14) zum Heizen und den Einrichtungen (15) zum Kühlen vorbei geführt ist, wobei die Folie (11) zumindest streckenweise nicht flächig auf einer Oberfläche aufliegt, sondern von den steuerbar angetriebenen Walzen (10) lediglich punktuell unterstützt und gefördert und ansonsten berührungslos geführt wird, und wobei eine Spannung der Folie (11) über die Geschwindigkeit der angetriebenen Walzen (10) regelbar ist, wodurch aufgrund der Heizung entstehende Spannungen ausgleichbar sind.

2. Vorrichtung (1) nach Anspruch 1,
wobei angetriebene Walzen (10) in Bewegungsrichtung der Folie (11) zumindest vor und hinter den Einrichtungen (14, 15) zum Heizen und zum Kühlen angeordnet sind.

3. Vorrichtung (1) nach Anspruch 1 oder 2,
wobei die thermoplastische Folie (11) beabstandet zu den Einrichtungen (14) zum Heizen geführt ist.

4. Vorrichtung (1) nach einem der Ansprüche 1 bis 3,
wobei die Einrichtungen (15) zum Kühlen zumindest eine gekühlte Walze (21) umfassen, über die die Folie (11) geführt ist.

5. Vorrichtung (1) nach einem der Ansprüche 1 bis 3,
wobei die thermoplastische Folie (11) beabstandet zu den Einrichtungen (15) zum Kühlen geführt ist.

6. Vorrichtung (1) nach einem der Ansprüche 1 bis 5,
wobei zwischen den Einrichtungen (14) zum Heizen und der thermoplastischen Folie (11) Gitter (18) zum Schutz der Einrichtungen (14) zum Heizen vor einem Kontakt mit der Folie (11) angeordnet sind.

7. Vorrichtung (1) nach einem der Ansprüche 1 bis 6,
wobei die Zuführeinrichtung (4) zumindest eine Einrichtung zur Erzeugung eines Luftstroms zwischen der thermoplastischen Folie (11) und den Einrichtungen (14) zum Heizen aufweist.

8. Vorrichtung (1) nach einem der Ansprüche 1 bis 7,
wobei die thermoplastische Folie (11) in der Zuführeinrichtung (4) zumindest abschnittsweise senkrecht nach oben und/oder nach unten geführt ist.

9. Vorrichtung (1) nach einem der Ansprüche 1 bis 8,
wobei die thermoplastische Folie in der Zuführeinrichtung zumindest abschnittsweise schräg nach oben und/oder nach unten geführt ist.

10. Vorrichtung (1) nach einem der Ansprüche 1 bis 9,
wobei die thermoplastische Folie (11) in der Zuführeinrichtung (4) zumindest abschnittsweise auf einem Kreisbogen geführt ist.

11. Vorrichtung (1) nach einem der Ansprüche 1 bis 10,
wobei die Zuführeinrichtung (4) einen alternativen Zuführweg für eine Folie (11) aufweist, der keine Einrichtungen (14) zum Heizen und keine Einrichtungen (15) zum Kühlen umfasst.

12. Vorrichtung (1) nach einem der Ansprüche 1 bis 11,
die ferner eine Einrichtung (20) zum Auffangen von an den Einrichtungen (15) zum Kühlen entstehendem Kondensat aufweist.

13. Verfahren zum Kaschieren eines Substrats (12) mit einer thermoplastischen Folie (11), wobei das Verfahren das Zuführen der Folie (11) zu einem Kaschierwerk (2) umfasst, wobei das Zuführen mittels einer Anzahl steuerbar angetriebener Walzen (10) erfolgt, über die die Folie (11) geführt wird, wobei die Folie (11) zumindest streckenweise nicht flächig auf einer Oberfläche aufliegt, sondern von den steuerbar angetriebenen Walzen (10) lediglich punktuell unterstützt und gefördert und ansonsten berührungslos geführt wird, wobei die Folie (11) während des Zuführens auf einer ersten Seite (16) beheizt und auf einer zweiten Seite (17) gekühlt wird, wobei während des Zuführens eine Spannung der Folie (11) über die Geschwindigkeit der angetriebenen Walzen (10) geregelt wird, wodurch aufgrund der Heizung entstehende Spannungen ausgleichbar sind.

14. Verfahren nach Anspruch 13,
wobei die Folie (11) durch einen in einen Zwischenraum zwischen der Folie (11) und den Einrichtungen (14) zum Heizen eingeblasenen Luftstrom auf Abstand von den Einrichtungen zum Heizen (14) gehalten wird.

15. Verfahren nach Anspruch 13 oder 14,
wobei ein sich an Einrichtungen (15) zum Kühlen bildendes Kondensat aufgefangen wird.

## Claims

1. An apparatus (1) for laminating a substrate (12) with a thermoplastic film (11), wherein the apparatus (1) comprises the following:
- a laminating unit (2) for laminating the substrate (12) with the thermoplastic film (11),
- a feed device (4) for feeding the thermoplastic film (11) to the laminating unit (2),
wherein the feed device (4) for the thermoplastic film (11) has devices (14) for heating a first side (16) of the film (11) and devices (15) for cooling a second side (17) of the film (11), as well as a number of controllably driven rollers (10) via which the film (11) is guided past the devices (14) for heating and the devices (15) for cooling, wherein the film (11) does not lie, at least in portions, flat on a surface, but instead is supported and conveyed only at specific points by the controllably driven rollers (10) and is otherwise guided in a contactless manner, and wherein a tension of the film (11) can be regulated via the speed of the driven rollers (10), as a result of which tensions arising from the heating can be compensated for.

2. The apparatus (1) according to claim 1,
wherein driven rollers (10) are arranged, in the direction of movement of the film (11), at least upstream of and downstream of the devices (14, 15) for heating and for cooling.

3. The apparatus (1) according to claim 1 or 2,
wherein the thermoplastic film (11) is guided at a distance from the devices (14) for heating.

4. The apparatus (1) according to one of claims 1 to 3,
wherein the devices (15) for cooling comprise at least one cooled roller (21) over which the film (11) is guided.

5. The apparatus (1) according to one of claims 1 to 3,
wherein the thermoplastic film (11) is guided at a distance from the devices (15) for cooling.

6. The apparatus (1) according to one of claims 1 to 5,
wherein, between the devices (14) for heating and the thermoplastic film (11), grids (18) are arranged for protecting the devices (14) for heating from contact with the film (11).

7. The apparatus (1) according to one of claims 1 to 6,
wherein the feed device (4) has at least one device for generating an air flow between the thermoplastic film (11) and the devices (14) for heating.

8. The apparatus (1) according to one of claims 1 to 7,
wherein the thermoplastic film (11) is guided in the feed device (4) vertically upward and/or downward at least in portions.

9. The apparatus (1) according to one of claims 1 to 8,
wherein the thermoplastic film is guided in the feed device obliquely upward and/or downward at least in portions.

10. The apparatus (1) according to one of claims 1 to 9,
wherein the thermoplastic film (11) is guided in the feed device (4) on a circular arc at least in portions.

11. The apparatus (1) according to one of claims 1 to 10,
wherein the feed device (4) has an alternative feed path for a film (11), which alternative feed path does not comprise any devices (14) for heating or any devices (15) for cooling.

12. The apparatus (1) according to one of claims 1 to 11,
further comprising a device (20) for collecting condensate formed at the devices (15) for cooling.

13. A method for laminating a substrate (12) with a thermoplastic film (11),
wherein the method comprises feeding the film (11) to a laminating unit (2),
wherein the feeding takes place by means of a number of controllably driven rollers (10) via which the film (11) is guided, wherein the film (11) does not lie, at least in portions, flat on a surface, but instead is supported and conveyed only at specific points by the controllably driven rollers (10) and is otherwise guided in a contactless manner, wherein during feeding the film (11) is heated on a first side (16) and cooled on a second side (17),
wherein during feeding a tension of the film (11) is regulated via the speed of the driven rollers (10), as a result of which tensions arising from the heating can be compensated for.

14. The method according to claim 13,
wherein the film (11) is held at a distance from the devices (14) for heating by an air flow blown into a space between the film (11) and the devices (14) for heating.

15. The method according to claim 13 or 14,
wherein a condensate which forms at devices (15) for cooling is collected.

## Revendications

1. Dispositif (1) de laminage d'un substrat (12) avec un film thermoplastique (11), dans lequel le dispositif (1) présente ce qui suit :
- un système de laminage (2) pour le laminage du substrat (12) avec le film thermoplastique (11),
- un dispositif d'amenée (4) du film thermoplastique (11) au système de laminage (2),
dans lequel le dispositif d'amenée (4) du film thermoplastique (11) présente des dispositifs (14) de chauffage d'une première face (16) du film (11) et des dispositifs (15) de refroidissement d'une seconde face (17) du film (11), ainsi qu'un certain nombre de rouleaux (10) à entraînement commandable, sur lesquels le film (11) est guidé devant les dispositifs (14) de chauffage et les dispositifs (15) de refroidissement, dans lequel le film (11) ne repose pas au moins en partie à plat sur une surface, mais est plutôt soutenu et transporté seulement ponctuellement par les rouleaux (10) à entraînement commandable et par ailleurs guidé sans contact, et dans lequel une tension du film (11) peut être réglée par la vitesse des rouleaux (10) entraînés, moyennant quoi des tensions qui résultent du chauffage peuvent être compensées.

2. Dispositif (1) selon la revendication 1,
dans lequel des rouleaux (10) entraînés sont agencés dans la direction de déplacement du film (11) au moins devant ou derrière les dispositifs (14, 15) de chauffage et de refroidissement.

3. Dispositif (1) selon la revendication 1 ou 2,
dans lequel le film thermoplastique (11) est guidé à distance des dispositifs (14) de chauffage.

4. Dispositif (1) selon l'une des revendications 1 à 3,
dans lequel les dispositifs (15) de refroidissement comprennent au moins un rouleau refroidi (21) sur lequel le film (11) est guidé.

5. Dispositif (1) selon l'une des revendications 1 à 3,
dans lequel le film thermoplastique (11) est guidé à distance des dispositifs (15) de refroidissement.

6. Dispositif (1) selon l'une des revendications 1 à 5,
dans lequel, entre les dispositifs (14) de chauffage et le film thermoplastique (11), des grilles (18) de protection des dispositifs (14) de chauffage sont agencées avant un contact avec le film (11).

7. Dispositif (1) selon l'une des revendications 1 à 6,
dans lequel le dispositif d'amenée (4) présente au moins un dispositif de génération d'un flux d'air entre le film thermoplastique (11) et les dispositifs (14) de chauffage.

8. Dispositif (1) selon l'une des revendications 1 à 7,
dans lequel le film thermoplastique (11) dans le dispositif d'amenée (4) est guidé au moins partiellement verticalement vers le haut et/ou vers le bas.

9. Dispositif (1) selon l'une des revendications 1 à 8,
dans lequel le film thermoplastique dans le dispositif d'amenée est guidé au moins partiellement obliquement vers le haut et/ou vers le bas.

10. Dispositif (1) selon l'une des revendications 1 à 9,
dans lequel le film thermoplastique (11) dans le dispositif d'amenée (4) est guidé au moins partiellement sur un arc circulaire.

11. Dispositif (1) selon l'une des revendications 1 à 10,
dans lequel le dispositif d'amenée (4) présente un chemin d'amenée alternatif pour un film (11), lequel chemin ne comprend aucun dispositif (14) de chauffage et aucun dispositif (15) de refroidissement.

12. Dispositif (1) selon l'une des revendications 1 à 11,
lequel présente en outre un dispositif (20) de récupération d'un condensat produit dans les dispositifs (15) de refroidissement.

13. Procédé de laminage d'un substrat (12) avec un film thermoplastique (11), dans lequel le procédé comprend l'amenée du film (11) vers un système de laminage (2), dans lequel l'amenée se fait à l'aide d'un certain nombre de rouleaux (10) à entraînement commandable, sur lesquels le film (11) est guidé, dans lequel le film (11) ne repose pas au moins en partie à plat sur une surface, mais est plutôt soutenu et transporté seulement ponctuellement par les rouleaux (10) à entraînement commandable et par ailleurs guidé sans contact, dans lequel, pendant l'amenée, une première face (16) du film (11) est chauffée et une seconde face (17) est refroidie, dans lequel, pendant l'amenée, une tension du film (11) est réglée par la vitesse des rouleaux (10) entraînés, moyennant quoi des tensions qui résultent du chauffage peuvent être compensées.

14. Procédé selon la revendication 13,
dans lequel le film (11) est maintenu, par un flux d'air injecté dans un espace entre le film (11) et les dispositifs (14) de chauffage, à distance des dispositifs (14) de chauffage.

15. Procédé selon la revendication 13 ou 14,
dans lequel un condensat se formant dans les dispositifs (15) de refroidissement est récupéré.
